# Europäisches Patentamt

(19) **European Patent Office**

**Office européen des brevets**

(11) Veröffentlichungsnummer: **0 012 306**
**B1**

(12) ## EUROPÄISCHE PATENTSCHRIFT

(45) Veröffentlichungstag der Patentschrift:
22.05.85

(51) Int. Cl.⁴: **G 01 S 7/28, H 03 M 9/00**

(21) Anmeldenummer: **79104828.3**

(22) Anmeldetag: **01.12.79**

(54) **Mehrkanalige Verstärkereinrichtung mit einem Verstärker für zeitlich verschachtelte Schwingungspakete.**

(30) Priorität: **15.12.78 CH 12778/78**
**24.08.79 CH 7708/79**

(43) Veröffentlichungstag der Anmeldung:
**25.06.80 Patentblatt 80/13**

(45) Bekanntmachung des Hinweises auf die Patenterteilung:
**22.05.85 Patentblatt 85/21**

(84) Benannte Vertragsstaaten:
**BE CH DE FR GB IT NL SE**

(56) Entgegenhaltungen:
**GB - A - 832 662**
**US - A - 2 719 187**

(73) Patentinhaber: **SIEMENS-ALBIS AKTIENGESELLSCHAFT, EGA1/Verträge und Patente Postfach, CH-8047 Zürich (CH)**

(72) Erfinder: **Bächtiger, Rolf, Eggächerstrasse 119, CH-8966 Oberwil (CH)**

## Beschreibung

Die vorliegende Erfindung betrifft eine mehrkanalige Verstärkereinrichtung mit einem Verstärker für zeitlich verschachtelte Schwingungspakete gemäss dem Oberbegriff des Patentanspruches 1.

Bei der Bearbeitung von Schwingungs- oder Impulspaketen ist es manchmal erforderlich, mehrere parallele Kanäle mit möglichst identischen elektrischen Eigenschaften zur Verfügung zu haben. Zudem ist oft der Abstand zwischen zwei aufeinanderfolgenden Schwingungspaketen ein Vielfaches von deren Breite. So sollen beispielsweise in einem nach dem Amplitudenmonopulsverfahren arbeitenden Radargerät Verstärker eingebaut werden, deren Toleranzen bezüglich Verstärkung nach Amplitude und Phase möglichst eng einzuhalten sind. Dies ist notwendig, weil die von der Antennenanordnung gelieferten Empfangssignale erst nach erfolgter selektiver Verstärkung zwecks Zieldatenermittlung untereinander in Beziehung gesetzt werden können. Dabei wird die Lösung dieser Aufgabe erschwert, weil die Empfangssignale einen grossen Dynamikbereich aufweisen.

Eine aus der GB-A-832 662 bekannte Verstärkereinrichtung weist einen Verstärker auf, dessen Eingang über drei Eingangsschalter mit je einem Eingangskanal verbunden ist, welchem jeweils ein Schwingungspaket zugeordnet ist. Der Ausgang des Verstärkers ist mit je einem dem entsprechenden Schwingungspaket zugeordneten Ausgangskanal verbunden. Zwischen dem Eingang des Verstärkers und den zwei ersten Eingangsschaltern ist je eine Verzögerungsleitung und zwischen dem Ausgang des Verstärkers und den Anschlüssen der zwei letzten Ausgangskanäle ist je eine Verzögerungsleitung derart eingefügt, dass die gesamte Laufzeit von einem Eingangsschalter bis zu dem ihm zugeordneten ausgangsseitigen Anschluss für alle drei Kanäle gleich gross ist. Die Schwingungspakete gelangen jedoch zeitlich verschachtelt und ohne Überlappungen an den Eingang des Verstärkers.

Dadurch, dass somit sämtliche Eingangssignale denselben Verstärker durchlaufen, ist sichergestellt, dass sie dieselbe Verstärkung in Betrag und Phase erfahren.

Die aus der GB-A-832 662 bekannte Verstärkereinrichtung, die grundsätzlich den Merkmalen des Oberbegriffs des Patentanspruches 1 entspricht, wird der gestellten Aufgabe nur bedingt oder mit relativ grossem technischem Aufwand gerecht, da es schwierig ist, genaue Verzögerungsleitungen herzustellen.

Die vorliegende Erfindung zeigt einen Weg, um die gestellte Aufgabe in einer besonders vorteilhaften Weise zu lösen.

Die Lösung dieser Aufgabe erfolgt erfindungsgemäss durch die im kennzeichnenden Teil des Patentanspruchs 1 angegebenen Massnahmen.

Andere vorteilhafte Ausgestaltungen der Erfindung sind in weiteren Ansprüchen angegeben.

Die Erfindung wird nachfolgend durch Beschreibung von Ausführungsbeispielen anhand von Zeichnungen näher erläutert. Es zeigen:

Fig. 1 ein Blockschaltbild einer Verstärkereinrichtung mit zwei Mehrfachverzögerungsleitungen samt Umschaltern nach der Erfindung.

Fig. 2 ein Blockschaltbild einer Verstärkereinrichtung mit bidirektionalen Mehrfachverzögerungsleitungen.

Als Verzögerungsleitungen können in vorteilhafter Weise Oberflächenwellenfilter (Surface Acoustic Wave Filters) eingesetzt werden, wie sie beispielsweise aus «Microwave System News», September 1978, Seiten 75–84: «SAW-Filters Simplify Signal Sorting» bekannt sind. Diese Verzögerungsleitungen weisen Bandpassfiltereigenschaften bei Frequenzen zwischen 10 MHz und 1 GHz auf und können somit ohne weiteren Aufwand die oft notwendige Optimalfilterung zur Verbesserung des Signal/Rausch-Abstandes übernehmen, was zu einer Vereinfachung des Verstärkeraufbaus führt, der dann ohne zusätzliche Bandpassfilter auskommen kann. Solche Oberflächenwellenfilter geben jedoch ein kleines, um drei Laufzeiten verzögertes Störsignal ab, das durch die unvermeidlichen Fehlanpassungen am Aus- und Eingang entsteht. Solche Echosignale (Tripple Echo Responses) sind zwar sehr schwach, können aber bei erhöhten Anforderungen störendes Übersprechen auf die Nachbarkanäle und damit Signalverzerrungen verursachen. Dieser Nachteil kann in einfacher Weise eliminiert werden, wenn die Echosignalbedingung

$$Ten < 3 \cdot Tel$$

erfüllt ist.

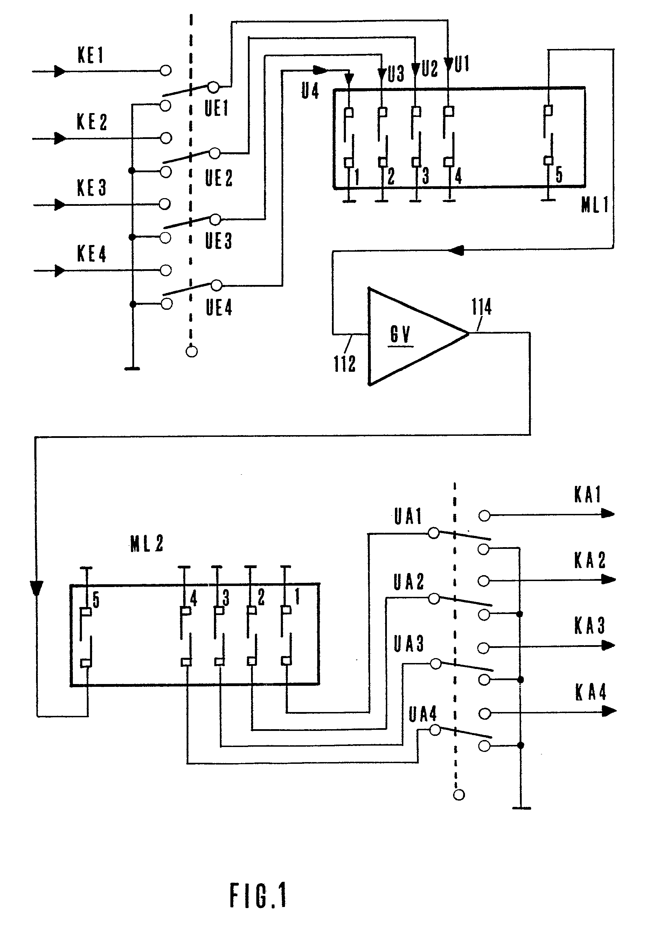

In Fig. 1 ist eine Verstärkereinrichtung dargestellt, bei der zwei Mehrfachverzögerungsleitungen ML1 und ML2 vorgesehen sind. Im Gegensatz zu einer Einzelverzögerungsleitung weist eine solche Mehrfachverzögerungsleitung mehrere elektroakustische Wandler auf. Bei der Mehrfachverzögerungsleitung ML1 arbeiten vier erste Wandler als Sendewandler und ein fünfter als Empfangswandler; bei der Mehrfachverzögerungsleitung ML2 arbeiten die vier ersten Wandler als Empfangswandler und der fünfte als Sendewandler. Die in Fig. 1 dargestellte Verstärkereinrichtung weist einen Verstärker GV auf, der eingangsseitig an den Empfangswandler der Mehrfachverzögerungsleitung ML1 und ausgangsseitig an den Sendewandler der Mehrfachverzögerungsleitung ML2 angeschlossen ist. Dabei sind vier Eingangskanäle KE1, KE2, KE3 und KE4 je über einen Umschalter UE1, UE2, UE3, UE4 mit dem vierten, dritten, zweiten bzw. ersten Sendewandler der Mehrfachverzögerungsleitung ML1 und vier Ausgangskanäle KA1, KA2, KA3 und KA4 über je einen Umschalter UA1, UA2, UA3, UA4 mit dem ersten, zweiten, dritten bzw. vierten Empfangswandler der Mehrfachverzögerungsleitung ML2 verbindbar.

Die Verstärkereinrichtung nach Fig. 1 funktioniert folgendermassen: Es sei τij die Verzögerungszeit zwischen dem i-ten und dem j-ten Wandler, wobei die Beziehungen

$$\tau12 = \tau21 = \tau34 = \tau43 = \tau p$$
$$\tau23 = \tau32 = \tau q$$
$$\text{und} \quad \tau45 = \tau54 = \tau o$$

gelten, wobei $\tau o \neq \tau k \neq \tau q$ sein kann.

Ein über den Kanal KE1 ankommendes Schwingungspaket U1 gelangt über den Umschalter UE1 zum vierten Sendewandler und braucht eine Zeit $\tau45 = \tau o$, bis es beim Empfangswandler der Mehrfachverzögerungsleitung ML1 angekommen ist. Nach der Verstärkung dieses Schwingungspaketes im Verstärker GV gelangt es zum Sendewandler der Mehrfachverzögerungsleitung ML2, in der es eine Zeit $\tau54 + \tau41 = \tau o + 2 \cdot \tau p + \tau q$ verweilt, bis es beim ersten Empfangswandler ankommt, von wo aus es über den Umschalter UA1 zum Kanalausgang KA1 gelangt. Insgesamt verbleibt daher das Schwingungspaket U1 während einer Zeit $\tau t = 2 \cdot \tau o + 2 \cdot \tau p + \tau q$ in der Verstärkereinrichtung. Ein Schwingungspaket U2 über den Kanal 2 verweilt während einer Zeit $\tau34 + \tau45 = \tau p + \tau o$ in der Mehrfachverzögerungsleitung ML1 und während einer Zeit $\tau54 + \tau42 = \tau o + \tau p + \tau q$ in der Mehrfachverzögerungsleitung ML2; die totale Verzögerungszeit ist somit $\tau t = 2 \cdot \tau o + 2 \cdot \tau p + \tau q$. Die gleiche totale Verzögerungszeit gilt auch für die Schwingungspakete U3 und U4.

Bei der Realisierung einer Verstärkereinrichtung mit Mehrfachverzögerungsleitungen nach Fig. 1 ergeben sich wesentliche Einsparungen gegenüber einer Verstärkereinrichtung mit einzelnen Verzögerungsleitungen, da deren Ein- oder Ausgänge nicht ohne weiteres parallel geschaltet werden können, wenn es sich darum handelt, hochfrequente Signale zu koppeln. Um die einzelnen Verzögerungsleitungen zu kombinieren, sind daher spezielle Summations- oder Verteilernetzwerke erforderlich, die bei einer Verstärkereinrichtung mit Mehrfachverzögerungsleitungen entfallen. Da diese zudem gleich sein können, ergibt sich der Vorteil, dass man mit einer einzigen photolithographischen Maske auskommen kann. Eine Mehrfachverzögerungsleitung bringt noch den Vorteil mit sich, dass sie viel weniger Platz als die Summe einer entsprechenden Anzahl von einzelnen Verzögerungsleitungen braucht, und dass alle Verzögerungsstrecken thermisch gekoppelt sind.

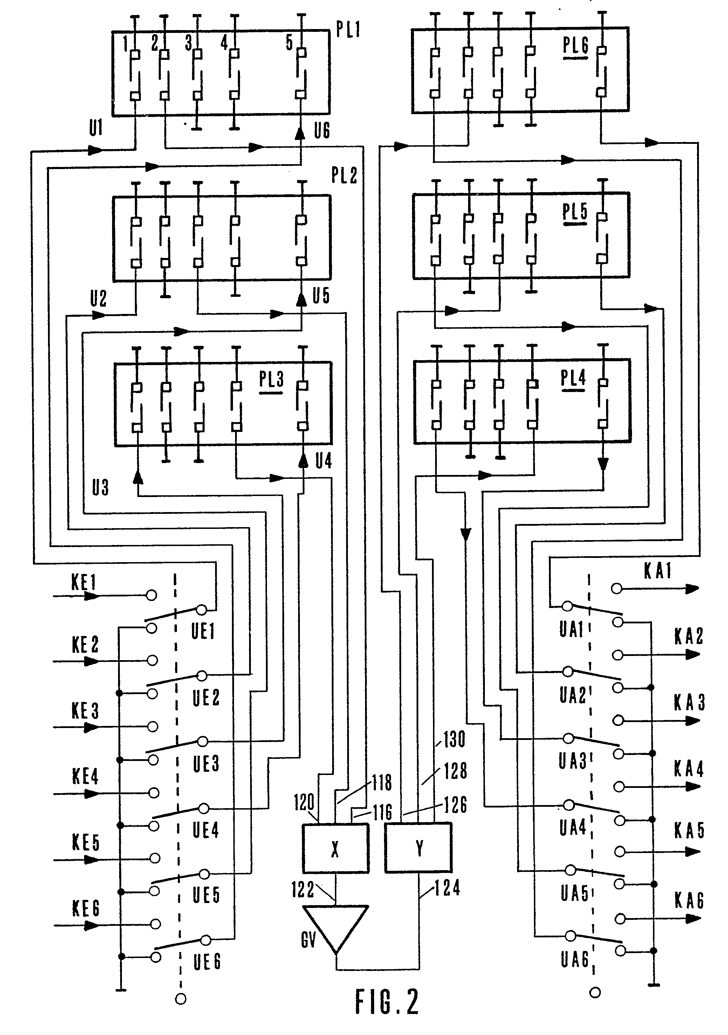

Die in Fig. 2 dargestellte Verstärkereinrichtung nützt die bidirektionale Eigenschaft der akustischen Wandler auf dem Kristall-Substrat aus. Diese Verstärkereinrichtung weist sechs Mehrfachverzögerungsleitungen PL1, PL2, PL3, PL4, PL5 und PL6 auf, die ähnlich wie die Mehrfachverzögerungsleitungen ML1 und ML2 (Fig. 1) aufgebaut sind. Über je einen Eingangsumschalter UE1, ... UE6 sind die Kanaleingänge KE1, KE2 und KE3 mit je einem ersten Wandler und die Kanaleingänge KE6, KE5 und KE4 mit je einem letzten Wandler der Verzögerungsleitungen PL1, PL2 bzw. PL3 verbindbar. Der zweite Wandler der Verzögerungsleitung PL1, der dritte Wandler der Verzögerungsleitung PL2 und der vierte Wandler der Verzögerungsleitung PL3 sind je an einem Eingang eines Summationsnetzwerkes X angeschlossen, dessen Ausgang über einen Verstärker GV mit dem Eingang eines Verteilernetzwerkes Y verbunden ist. Dabei sind der zweite Wandler der Verzögerungsleitung PL6, der dritte Wandler der Verzögerungsleitung PL5 und der vierte Wandler der Verzögerungsleitung PL4 je an einem Ausgang des Verteilernetzwerkes Y angeschlossen. Über je einen Umschalter sind die Kanalausgänge KA1, KA2 und KA3 mit je einem letzten Wandler und die Kanalausgänge KA6, KA5 und KA4 mit je einem ersten Wandler der Verzögerungsleitungen PL6, PL5 bzw. PL4 verbindbar.

Als Summationsnetzwerk X und als Verteilernetzwerk Y kann je ein sogenannter Verzweigungspunkt eingesetzt werden. Derartige Verzweigungspunkte, auch «Power-Divider» genannt, sind beispielsweise aus dem Buch «Taschenbuch der Hochfrequenztechnik» von H. Meinke und F. W. Gundlach, Springer-Verlag, 1968, Seite 361, bekannt und brauchen daher hier nicht beschrieben zu werden.

Wird ein mittlerer elektroakustischer Wandler einer der Verzögerungsleitungen PL6, PL5 oder PL4 angeregt, so breiten sich in beide Abstrahlrichtungen genau gleich starke mechanische Wellen aus. Dies im Gegensatz zum Normalfall, bei dem eine der beiden Wellen unterdrückt wird. Eine solche Unterdrückung geschieht normalerweise mittels einer auf das Substrat aufgebrachten unelastischen Dämpfungsmasse, oder es werden spezielle Wandlerstrukturen gewählt, die beispielsweise durch gegenphasige Anregung die eine Abstrahlrichtung unterdrücken.

Die Verzögerungsleitungen PL1, PL2 und PL3 werden in umgekehrter Weise betrieben, indem Signale in den ersten und den letzten Wandler eingespeist und im mittleren Wandler aufsummiert werden.

Die mehrkanalige Verstärkereinrichtung nach Fig. 2 funktioniert folgendermassen: Es sei $\tau ij$ die Verzögerungszeit zwischen dem i-ten und dem j-ten Wandler, wobei die Beziehungen $\tau12 + \tau23 = \tau13 = \tau32 + \tau21 = \tau31$ und allgemein $\tau ik + \tau kj = \tau ij$ für $i<k<j$ durch die Geometrie selbst gegeben sind. Dabei kann hier auch $\tau12 \neq \tau23 \neq \tau34$ sein.

Ein Schwingungspaket U1 gelangt vom ersten bis zum zweiten Wandler in der Verzögerungsleitung PL1, über den Verstärker GV und vom zweiten bis zum letzten Wandler in der Verzögerungsleitung PL6; damit ergibt sich eine totale Verzögerungszeit von $\tau t = \tau12 + \tau25 = \tau15$. Entsprechendes gilt für die totale Verzögerungszeit der Schwingungspakete U2 und U3, die ebenfalls $\tau15$ ist.

Ein Schwingungspaket U4 gelangt in der Verzögerungsleitung PL3 vom letzten bis zum vierten Wandler und hierauf über den Verstärker GV und sodann in der Verzögerungsleitung PL4 vom vierten bis zum ersten Wandler; damit ergibt sich eine totale Verzögerungszeit von $\tau t = \tau54 + \tau41 = \tau51 = \tau15$.

Entsprechendes gilt für die totale Verzögerungszeit der Schwingungspakete U5 und U6. Gleichzeitig ankommende Schwingungspakete gelangen somit auch gleichzeitig zu den Umschaltern der Ausgangskanäle.

Der Vorteil einer Verstärkereinrichtung nach Fig. 2, bei der die Bedingungen

$$\tau12 = \tau23 = \tau34 = \dots$$

nicht erfüllt zu werden brauchen, liegt darin, dass Ungenauigkeiten im Herstellungsprozess, beispielsweise bei der Maskenfertigung, sich nicht auswirken können. Im weiteren wird eine Verbilligung dadurch erreicht, dass man mit einer einzigen Verzögerungsleitungsstruktur auskommen kann; die einzelnen Verzögerungselemente entstehen durch einfaches Kurzschliessen der jeweils unbenutzten Wandler. Bei einer Verstärkereinrichtung mit nur zwei Kanälen sind zudem die Netzwerke X und Y (Fig. 2) nicht erforderlich.

Die Umschalter der Verstärkereinrichtungen nach den Fig. 1 und 2 sorgen dafür, dass die elektroakustischen Wandler immer kurzgeschlossen sind, wenn nicht gerade ein interessierendes Signal anliegt. Damit ist gewährleistet, dass diejenigen Wellen, die in einer solchen Anordnung unter einem oder mehreren Wandlern durchlaufen, durch diese keine Dämpfung erleiden.

Die elektroakustischen Wandler gemäss Fig. 1 und 2 können derart ausgestaltet werden, dass sie eine bestimmte Filtercharakteristik, beispielsweise eine Bandpasscharakteristik, aufweisen.

Die in den Fig. 1 und 2 beispielsweise für vier bzw. sechs Kanäle dargestellten Verstärkereinrichtungen können selbstverständlich auch für eine grössere Anzahl Kanäle in gleicher Form erweitert werden.

Zur Realisierung der Verzögerungsleitungen wird vorzugsweise die Oberflächenwellentechnik benutzt. Dabei besteht eine Einzelverzögerungsleitung aus einem piezoelektrischen Kristall-Substrat und zwei elektroakustischen Wandlern, von denen einer als Sendewandler und der andere als Empfangswandler dient. Näheres über die Oberflächentechnik ist beispielsweise aus dem Aufsatz: «Bauelemente mit akustischen Oberflächenwellen» in «Nachrichtenelektronik», Heft 6, 1978, Seiten 181 bis 187, zu entnehmen.

**Patentansprüche**

1. Mehrkanalige Verstärkereinrichtung mit einem Verstärker (GV) für zeitlich verschachtelte Schwingungspakete, dessen Eingang mit je einem Eingangskanal (KE), dem jeweils ein Schwingungspaket zugeordnet ist, über mehrere Eingangsverzögerungsleitungen verbunden ist, die derart unterschiedlich bemessen sind, dass die Schwingungspakete einander im Verstärker nicht überlappen, und dessen Ausgang jeweils über eine komplementär bemessene Ausgangsverzögerungsleitung mit je einem dem entsprechenden Schwingungspaket zugeordneten Ausgangskanal (KA) verbindbar ist, dadurch gekennzeichnet, dass mehrere der Eingangsverzögerungsleitungen und mehrere der Ausgangsverzögerungsleitungen je aus einer akustischen Mehrfachverzögerungsleitung (ML1 bzw. ML2; PL1–3 bzw. PL4–6) mit dementsprechend vielen Wandlern (1 bis 4 in ML; 1 und 5 in PL) bestehen, die auf ein und demselben Substrat in ein und derselben Verzögerungsstrecke untergebracht sind, und dass diese Wandler an einem Umschalter (UE bzw. UA) angeschlossen sind, der sie immer dann an einen Kurzschluss für das durchlaufende Signal anschliesst, wenn nicht gerade ein interessierendes Signal anliegt.

2. Verstärkereinrichtung nach Patentanspruch 1, dadurch gekennzeichnet, dass bei allen Kanälen (KEi, KAi) die Summe der Laufzeit (Te) einer einzelnen Eingangsverzögerungsleitung einer Mehrfachverzögerungsleitung (ML1; PL1–3) und der Laufzeit (Ta) der ihr zugeordneten einzelnen Ausgangsverzögerungsleitung einer Mehrfachverzögerungsleitung (ML2; PL4–6) gleich gross ist.

3. Verstärkereinrichtung nach Patentanspruch 1, dadurch gekennzeichnet, dass die Eingangsverzögerungsleitungen durch eine erste und die Ausgangsverzögerungsleitungen durch eine zweite Mehrfachverzögerungsleitung (ML1 bzw. ML2) gebildet sind, wobei der Verstärker (GV) eingangsseitig an den Empfangswandler (5 in ML1) der ersten Mehrfachverzögerungsleitung und ausgangsseitig an den Sendewandler (5 in ML2) der zweiten Mehrfachverzögerungsleitung angeschlossen ist, und wobei einerseits die Ausgangskanäle (KA1, KA2, KA3, KA4) über je einen Ausgangsumschalter (UA1, UA2, UA3, UA4) mit je einem Empfangswandler (1 bis 4 im ML2) der zweiten Mehrfachverzögerungsleitung und andererseits die Eingangskanäle (KE1, KE2, KE3, KE4) über je einen Eingangsumschalter (UE1, UE2, UE3, UE4) in umgekehrter Reihenfolge mit je einem Sendewandler (4 bis 1 in ML1) der ersten Mehrfachverzögerungsleitung verbindbar sind.

4. Verstärkereinrichtung nach Patentanspruch 1, dadurch gekennzeichnet, dass einerseits die Eingangsverzögerungsleitungen durch mindestens eine Mehrfachverzögerungsleitung (PL1, PL2, PL3) gebildet sind, bei denen der erste und der letzte Wandler (1 und 5) als Sendewandler und ein mittlerer Wandler (2 bzw. 3 bzw. 4) als Empfangswandler arbeiten, und anderseits die Ausgangsverzögerungsleitungen durch mindestens eine Mehrfachverzögerungsleitung (PL4, PL5, PL6) gebildet sind, bei denen der letzte und der erste Wandler (5 und 1) als Empfangswandler und ein mittlerer Wandler (4 bzw. 3 bzw. 2) als Sendewandler arbeiten.

5. Verstärkereinrichtung nach Patentanspruch 4, dadurch gekennzeichnet, dass dem Verstärker (GV) ein Summationsnetzwerk (X) für die Ausgangssignale der mittleren Empfangswandler vorgeschaltet und ein Verteilernetzwerk (Y) für die Eingangssignale der mittleren Sendewandler nachgeschaltet ist.

6. Verstärkereinrichtung nach einem der vorhergehenden Patentansprüche, dadurch gekennzeichnet, dass zur Vermeidung von durch Echosignale hervorgerufenen Störeffekten die Verzögerungsleitung mit der grössten Verzögerungszeit (Ten) eine Verzögerung aufweist, die weniger als dreimal so gross ist wie die Verzögerung der Verzögerungsleitung mit der kleinsten Verzögerungszeit (Ten < 3.Te1).

7. Verstärkereinrichtung nach einem der vorhergehenden Patentansprüche, gekennzeichnet durch die Verwendung solcher Mehrfach-Verzögerungsleitungen (ML; PL), die zugleich Bandpassfiltereigenschaften aufweisen, um den Signal/Rausch-Abstand der Verstärkereinrichtung zu verbessern.

## Claims

1. A multi-channel amplifier device with an amplifier (GV) for multiplexed oscillation packets, the input of which amplifier is connected to a respective input channel (KE), each assigned an oscillation packet, via a plurality of input delay lines which differ in such manner that the oscillation packets do not overlap one another in the amplifier, and the output of the amplifier being connected via an output delay line of complementary design to a respective output channel (KA) assigned to the corresponding oscillation packet, characterised in that a plurality of the input delay lines and a plurality of the output delay lines each take the form of a multiple acoustic delay line (ML1 or ML2; PL1-3 or PL4-6 as the case may be) with a corresponding number of transducers (1 to 4 in ML; 1 and 5 in PL) which are accomodated on one substrate in the same delay line section, and that these transducers are connected to a change-over switch (UE or UA as the case may be) by which they are connected to a short-circuit for the passing signal whenever a signal of interest is not currently present.

2. An amplifier device as claimed in Claim 1, characterised in that in all the channels (KEi, KAi), the sum of the transit time (Te) of an individual input delay line of a multiple delay line (ML1; PL1-3) and the transit time (Ta) of the individual output delay line of a multiple delay line (ML2; PL4-6) assigned thereto is equal.

3. An amplifier device as claimed in Claim 1, characterised in that the input delay lines are formed by a first multiple delay line and the output delay lines are formed by a second multiple delay line (ML1 or ML2 as the case may be), where the amplifier (GV) is connected at its input to the receiving transducer (5 in ML1) of the first multiple delay line at its output is connected to the transmitting transducer (5 in ML2) of the second multiple delay line, and where on the one hand the output channels (KA1, KA2, KA3, KA4) can each be connected via an output change-over switch (UA1, UA2, UA3, UA4) to an input transducer (1 to 4 in ML2) of the second multiple delay line, and on the other hand the input channels (KE1, KE2, KE3, KE4) can each be connected via an input change-over switch (UE1, UE2, UE3, UE4) in the reverse sequence to a transmitting transducer (4 to 1 in ML1) of the first multiple delay line.

4. An amplifier device as claimed in Claim 1, characterised in that on the one hand the input delay lines are formed by at least one multiple delay line (PL1, PL2, PL3), where the first and last transducers (1 and 5) operate as transmitting transducers, and a middle transducer (2 or 3 or 4 as the case may be) operates as a receiving transducer, and on the other hand the output delay lines are formed by at least one multiple delay line (PL4, PL5, PL6), of which the last and first transducers (5 and 1) operate as receiving transducers and a middle transducer (4 or 3 or 2 as the case may be) operates as a transmitting transducer.

5. An amplifier device as claimed in Claim 4, characterised in that the amplifier (GV) is preceded by a summation network (X) for the output signals of the middle receiving transducers, and is followed by a distributer network (Y) for the input signals of the middle transmitting transducers.

6. An amplifier device as claimed in one of the preceding Claims, characterised in that in order to avoid interference effects produced by echo signals, the delay line which possesses the longest delay time (Ten) possesses a delay which is less than three times the delay of the delay line which possesses the shortest delay time (Ten < 3.Te1).

7. An amplifier device as claimed in one of the preceding Claims, characterised by the use of multiple delay lines (ML; PL) which simultaneously possess band-pass filter properties in order to improve the signal-to-noise ratio of the amplifier device.

## Revendications

1. Dispositif amplificateur à canaux multiples comportant un amplificateur (GV) pour des paquets d'oscillations intercalés dans le temps et dont l'entrée est reliée à des canaux respectifs d'entrée (RE), auxquels sont associés des paquets respectifs d'oscillations par l'intermédiaire de plusieurs lignes à retard d'entrée qui sont dimensionnées différemment de telle sorte que les paquets d'oscillations ne se chevauchent pas réciproquement dans l'amplificateur, et dont la sortie peut être reliée respectivement par l'intermédiaire d'une ligne à retard de sortie dimensionnée de façon complémentaire et comportant des canaux de sortie respectifs (KA) associés aux paquets correspondants d'oscillations, caractérisé par le fait que plusieurs des lignes à retard d'entrée et plusieurs des lignes à retard de sortie sont constituées respectivement par une ligne acoustique à retards multiples (ML1 ou ML2; PL1-3 ou PL4-6) comportant un nombre correspondant de transducteurs (1 à 4 dans ML; 1 et 5 dans PL), qui sont disposés sur un même substrat dans une même voie de retardement, et que ces transducteurs sont raccordés à un commutateur (UE ou UA), qui les raccorde en permanence à un court-circuit pour le signal circulant, lorsqu'un signal intéressant n'est précisément pas présent.

2. Dispositif amplificateur suivant la revendication 1, caractérisé par le fait que dans tous les canaux (KEi, KAi), la somme du temps de transit (Te) dans une ligne à retard d'entrée individuelle d'une ligne à retards multiples (ML1; PL1–3) et de la somme du temps de transit (Ta) dans la ligne à retard de sortie individuelle qui lui est associée d'une ligne à retards multiples (ML2; PL4–6) sont égales.

3. Dispositif amplificateur suivant la revendication 1, caractérisé par le fait que les lignes à retard d'entrée sont formées par une première ligne à retards multiples (ML1) et les lignes à retard de sortie sont formées par une seconde ligne à retards multiples (ML2) l'amplificateur (GV) étant raccordé, du côté entrée, au transducteur de réception (5 dans ML1) de la première ligne à retards multiples et, du côté sortie, au transducteur d'émission (5 dans ML2) de la seconde ligne à retards multiples, tandis que d'une part les canaux de sortie (KA1, KA2, KA3, KA4) peuvent être reliés par l'intermédiaire de commutateurs respectifs de sortie (UA1, UA2, UA3, UA4) à des transducteurs de réception respectifs (1 à 4 dans ML2) de la seconde ligne à retards multiples et que d'autre part les canaux d'entrée (KE1, KE2, KE3, KE4) peuvent être reliés par l'intermédiaire de commutateurs respectifs d'entrée (UE1, UE2, UE3, UE4), dans la succession inverse, au transducteur d'émission individuel (4 à 1 dans ML1) de la première ligne à retards multiples.

4. Dispositif amplificateur suivant la revendication 1, caractérisé par le fait que d'une part les lignes à retard d'entrée sont formées par au moins une ligne à retards multiples (PL1, PL2, PL3), dans laquelle le premier et le dernier transducteurs (1 et 5) travaillent comme transducteurs d'émission et un transducteur médian (2 ou 3 ou 4) travaille en tant que transducteur de réception, et que d'autre part les lignes à retard de sortie sont formées par au moins une ligne à retards multiples (PL4, PL5, PL6) dans laquelle le dernier et le premier transducteurs (5 et 1) travaillent comme transducteurs de réception et un transducteur médian (4 ou 3 ou 2) travaille en tant que transducteur d'émission.

5. Dispositif amplificateur suivant la revendication 4, caractérisé par le fait qu'un réseau de sommation (X) pour les signaux de sortie des transducteurs de réception médians est branché en amont de l'amplificateur (GV) et qu'un réseau de répartition (Y) pour les signaux d'entrée des transducteurs d'émission médians est branché en aval de l'amplificateur (GV).

6. Dispositif amplificateur suivant l'une des revendications précédentes, caractérisé par le fait qu'afin d'éviter des effets parasites provoqués par des signaux d'échos, la ligne à retard produisant le retard (Ten) maximum, fournit un retard qui est inférieur au triple du retard produit dans la ligne à retard fournissant le retard le plus faible (Ten < 3.Te1).

7. Dispositif amplificateur suivant l'une des revendications précédentes, caractérisé par l'utilisation de telles lignes à retard multiples (ML; PL), qui possèdent simultanément des caractéristiques de filtre passe-bande afin d'améliorer le rapport signal/bruit du dispositif amplificateur.

FIG.1

FIG.2